**Europäisches Patentamt**

**European Patent Office**

**Office européen des brevets**

(11) Veröffentlichungsnummer: **0 013 278**
**A1**

(12) # EUROPÄISCHE PATENTANMELDUNG

(21) Anmeldenummer: **78101727.2**

(22) Anmeldetag: **04.01.79**

(51) Int. Cl.³: **A 47 J 37/07**

(43) Veröffentlichungstag der Anmeldung:
**23.07.80 Patentblatt 80/15**

(84) Benannte Vertragsstaaten:
**DE FR GB SE**

(71) Anmelder: **Wittwer, Jens**
**Karlstrasse 6**
**D-3474 Boffzen(DE)**

(72) Erfinder: **Wittwer, Jens**
**Karlstrasse 6**
**D-3474 Boffzen(DE)**

(54) **Variabler zusammenlegbarer Holzkohle- und Gasgrill.**

(57) Bei einem variablen zusammenlegbaren Holzkohleund Gasgrill ist eine durchgehende Achse (8) die gleichzeitig Gasbrenner ist durch Bohrungen- in den Rahmen (6,7) und in den Abkanntungen des Bodenbleches (9) geführt. Die Stirnseitenbleche (12) stehen unbefestigt. Die Seitenbleche (10,11) mit entsprechend versehenen Abkanntungen sind eingehängt, zum Grillen mit Seitenhitze liegt Blech (11) oben auf und der doppelte Rost (20) steht senkrecht in den Einschnitten (13).

Zum Grillen mit Hitze nach oben sind beide Bleche (10,11) auf den Rahmenoberleisten eingehängt und der Rost (20) liegt aufgeklappt oben auf. Zum Variieren der Höhe von Feuerung bis Rost werden die Rahmen (6,7) mit dem Höhen- und Tiefenregler (16) versehen mit Gelenk (17) und der Lasche mit Gelenk und Dorn (18) gespreitzt oder zusammengezogen. Die in der Mitte unterteilte zusammengesteckte Aufliegeachse (15) hat die Funktion durch Gleiten auf dem Innenrahmen (7) das Bodenblech (9) mit den daraufstehenden Stirnseitenblechen (12) in jeder Höhe waagerecht zu halten.

Nach entfernen der Stirnseitenbleche (12) und auseinandernehmen der Aufliegeachse (15) kann der Grill scherenartig zusammengelegt werden.

EP 0 013 278 A1

./...

Croydon Printing Company Ltd

ABB 1
0013278
1/2

ABB 2

- I -

Variabler zusammenlegbarer Holzkohle- und Gasgrill

Die Erfindung bezieht sich auf einen Grill, der in variabler
Anwendung eine Feuerung mit Holzkohle oder Gas sowie die
Nutzung von jeweils Hitze zur Seite oder Hitze nach Oben gestattet, und zum Grillen bei Oberhitze mit einer Roste in
seiner Höhe von Feuerung bis Roste zu variieren ist,
und als grundsätzliche Merkmale in seiner Konstruktion nach
dem Herausnehmen der beiden Stirnseitenbleche I2, und Auseinandernehmen der in der Mitte zusammengesteckten Aufliegeachse I5 ergibt sich der Vorzug den Grill mit wenigen Handgriffen flach bis auf maximal 20 mm zusammenzulegen.

Als weitere Variation kann bei entsprechender Stabilität der
Rahmenkonstruktionen 6,7 und Verwendung einer eigens vorgesehenen Packhülle versehen mit Ösen, Haken oder Schlaufen
nach Entfernen der Stirnseitenbleche I2 und dem Aushängen
der Bleche I0,II ein Falthocker gemacht werden.

Im folgenden wird die Erfindung anhand von vier perspektivischen Zeichnungen näher erläutert. Es zeigt in der

Abbildung  I einen Grill in seiner grundsätzlichen Zusammensetzung in der Variation des Grillens mit Seitenhitze.

Durch die vier Bohrungen in der Mitte des Außen- und Innenrahmens 6,7 und die zwei Bohrungen in den Abkanntungen des
Bodenbleches 9 wird die Achse- und gleichzeitiger Gasbrenner 8
geführt.

- 2 -

Bei dem scherenartigen Zusammenklappen verbleibt das Bodenblech 9 permanent in der Konstruktion, dagegen können die
Seitenbleche IO,II versehen mit entsprechenden Abkanntungen
an den Rahmenoberleisten 6,7 ein- und ausgehängt werden.
Jedoch bei Zusammenklappen können die Seitenbleche IO,II
eingehängt bleiben. In dieser Variation der Seitenhitzeanwendung liegt Seitenblech II als Deckblech.

Die Stirnseitenbleche I2 mit den mehrstufigen Einschnitten
I3,I4 als Auflagen für Grillspieß mit handelsüblichen Grillmotor werden nach ausreichendem Spreitzen der Rahmen 6,7
von oben eingesetzt und stehen unbefestigt an den Abkanntungen auf dem Bodenblech 9 die Seitenbleche IO,II und die
Rahmen 6,7 gewähren das Aufrechstehen der losen Stirnseitenbleche. Die oberen Ecken sind der Anschlag für die Höchststellung der Rahmen 6,7 dieser Anschlag verhindert auch ein
nach Untenkippen der Stirnseitenbleche I2 sowie dem Bodenblech 9 in dieser Variation und Stellung für Seitenhitze.

Die Gasflasche mit Schlauchanschluß I9 wird an der auf einer
Seite verlängerten Achse- und gleichzeitigem Gasbrenner 8
befestigt, hier kann auch das Mundstück von einem Blasebalg angesetzt werden.

Die Roste 20 ist als doppeltet Wendegrillbräter alternativ
zu benutzen, einmal in dieser Variation und Stellung hält
sie nach senkrechtem Einsetzen in die Einschnitte I3 die
übereinander geschichtete Holzkohle auf ihrem Platz,
zum anderen liegt sie als Roste aufgeklappt oder als
Wendegrillbräter oben auf.

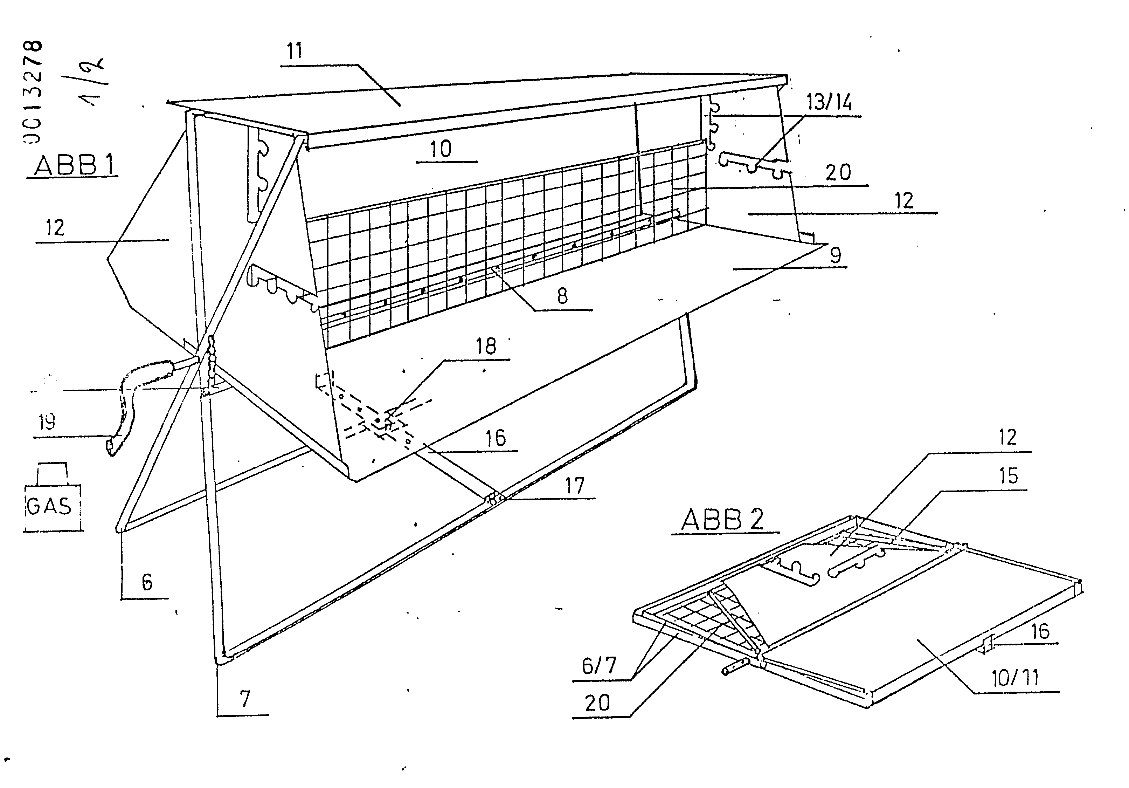

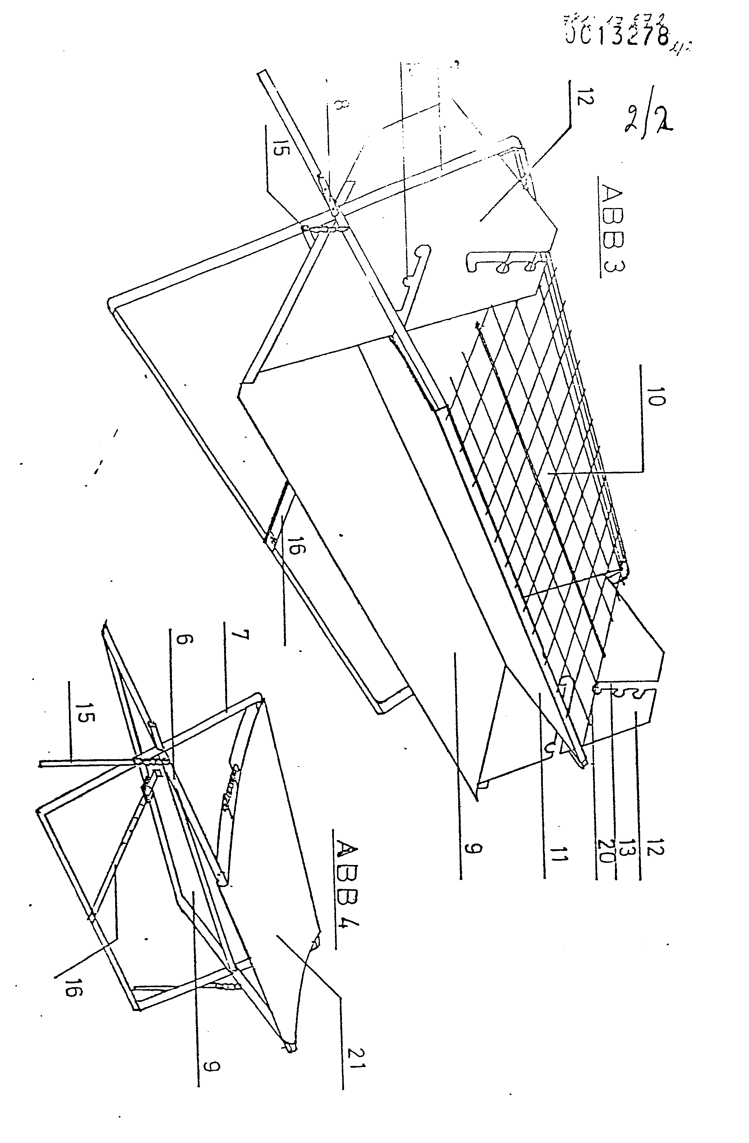

Abbildung 2 zeigt den Grill flach zusammengelegt sowie
die Aufnahme der losen Teile, Grillroste 20 und die
Stirnseitenbleche I2.

- 3 -

Abbildung 3 zeigt den Grill in der Variation und Stellung zur Anwendung mit Hitze nach oben. Hierbei liegt die doppelte als Wendegrillbräter zu benutzende Roste 20 oben auf. Als wesentliche Merkmale erweist die Konstruktion in dieser Variation und Stellung den Vorzug den Abstand von Feuerung bis Roste zu verändern indem Rahmen 6,7 mittels des Höhen- und Tiefenreglers 16 gespreitzt oder zusammengezogen werden.

Der Höhen- und Tiefenregler 16 ist mit einem Gelenk 17 auf dem Innenrahmen 7 befestigt unter der Unterkannte des Außenrahmens 6 ist eine Lasche mit Gelenk und Dorn 18 befestigt, hierdurch wird der gelochte Höhen- und Tiefenregler 16 geführt und durch Umklappen der Lasche 18 nach innen kann der Dorn in die vorgesehenen Löcher einrasten. Die durch die Spreitzung verursachte Belastung verhindert ein selbständiges Lösen der Feststellung.

Die in der Mitte unterteilte Aufliegeachse 15 ist mit je einem Stück Kette am Außenrahmen 6 befestigt und gleitet beim Spreitzen auf dem Innenrahmen 7, sie ergibt somit die Funktion, daß Bodenblech·9 und die Stirnseitenbleche 12 in jeder Höhe waagerecht verbleiben.

Die Abbildung 4 zeigt die Umwandlung als Falthocker. Hierbei werden die Seitenbleche 10,11 ausgehängt und die Packhülle 21 wird um die Rahmen 6,7 gelegt und mittels Haken und Ösen befestigt.

JC13278

6 Außenrahmen

7 Innenrahmen

8 Achse- und gleichzeitiger Gasbrenner

9 Bodenblech

10 Seitenblech

11 Seitenblech

12 Stirnseitenbleche

13 Mehrstufiger Einschnitt

14 Mehrstufiger Einschnitt

15 In der Mitte unterteile Auflegeachse

16 Höhen- und Tiefenregler

17 Gelenk

18 Lasche mit Gelenk und Dorn

19 Gasflasche mit Schlauchanschluß

20 Doppelte Roste - Wendegrillbräter

21 Packhülle mit Ösen und Haken

JC13278

Patentansprüche:

I. Variabler zusammenlegbarer Holzkohle- und Gasgrill, bestehend aus zwei Rahmen (6,7) an deren Oberleisten die zwei Seitenbleche (IO,II) angebracht sind, verbunden mit einer durchgehenden Achse die gleichzeitig Gasbrenner ist (8) und daran befestigt das Bodenblech (9) mit den senkrecht daraufstehenden Stirnseitenblechen (I2) und darunter die unterteilte Aufliegeachse (I5) _. mit flexibler Verbindung jeweils befestigt an jeder Seite des Außenrahmens (6), Höhen- und Tiefenregler (I6) befestigt am Innenrahmen (7) und durchgeführt durch eine umlegbare Lasche mit Dorn (I8) befestigt am Außenrahmen (6) dadurch gekennzeichnet, daß zum Grillen mit Hitze zur Seite Blech (II) oben aufliegt und die doppelte Roste-Wendegrillbräter (20) senkrecht in den Einschnitten (I3) steht,

daß zum Grillen mit Hitze nach Oben die beiden Seitenbleche (IO,II) keilförmig angebracht sind, die doppelte Roste (20) aufgeklappt oder als Wendegrillbräter in Längs- oder Querrichtung oben aufliegt und die Höhe von Feuerung bis Roste mittels des Höhen- und Tiefenreglers (I6) durch Spreitzen oder Zusammenziehen der Rahmen (6,7) zu variieren ist, daß der Grill nach Entfernen der Stirnseitenbleche (I2) und Auseinandernehmen der unterteilten Aufliegeachse (I5) scherenartig zusammengelegt werden kann.

2. Grill nach Patentanspruch I, durch Entfernen der Seiten- (IO,II) und der Stirnseitenbleche (I2) kann die Rahmenkonstruktion mit einer eigens für den Grill vorgesehenen Packhülle (2I) die versehen mit Ösen, Haken oder Schlaufen durch Umlegen an den Oberleisten der Rahmen (6,7) zu einem Falthocker umgewandelt werden.

0013278

1/2

ABB 1

11

10

13/14

20

12

12

9

8

18

16

19

17

GAS

6

7

ABB 2

12

15

6/7

16

20

10/11

ABB 3

ABB 4

🦅

🦅

Europäisches
Patentamt

**EUROPÄISCHER RECHERCHENBERICHT**

JC13278

Nummer der Anmeldung

EP 78 10 1727

| Kategorie | EINSCHLÄGIGE DOKUMENTE | | KLASSIFIKATION DER ANMELDUNG (Int.Cl.²) |
|---|---|---|---|
| | Kennzeichnung des Dokuments mit Angabe. soweit erforderlich. der maßgeblichen Teile | betrifft Anspruch | |
| A | <u>DE - U - 7 031 630</u> (TOREX)<br>* Anspruch 1; Figur 1 *<br><br>-- | 1 | A 47 J 37/07 |
| A | <u>DE - U - 6 937 401</u> (KAISER & CO)<br>* Anspruch 1; Figur 1 *<br><br>-- | 1 | |
| A | <u>US - A - 2 708 925</u> (CORDREY)<br>* Figuren 1,3,5 *<br><br>-- | 1 | |
| A | <u>US - A - 2 842 044</u> (KIRK)<br>* Figuren 1,2 *<br><br>---- | 1 | RECHERCHIERTE SACHGEBIETE (Int. Cl.²)<br><br>A 47 J |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L. aus andern Grunden angeführtes Dokument

&: Mitglied der gleichen Patentfamilie. übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05-09-1979 | SCHARTZ |

EPA form 1503.1   06.78